# EUROPEAN PATENT SPECIFICATION

(11) **EP 1 930 808 B1**
(45) Date of publication and mention of the grant of the patent: **07.11.2012**
(21) Application number: 06256223.6
(22) Date of filing: 06.12.2006
(51) Int. Cl.: G06F 9/44, G06F 9/445

(54) **Method for upgrading firmware of multilingual interface**
Methode zur Aktualisierung von Firmware mit mehrsprachiger Benutzerschnittstelle
Méthode pour l'actualisation de firmware avec une interface multilingue

(43) Date of publication of application: 11.06.2008
(73) Proprietor: Sercomm Corporation, Ju-Nan Miao-Li Hsien (TW)
(72) Inventor: Zou, Yu, Jiangsu (CN)
(74) Representative: Lang, Christian

(56) References cited:
- JP-A- 2006 031 100
- US-A1- 2003 153 304

## Description

### BACKGROUND OF THE INVENTION

### 1. Field of the Invention

The present invention relates generally to a method for upgrading a firmware, and in particular to a method for upgrading a firmware of a multilingual interface.

### 2. The Prior Arts

Generally, a firmware is designed in an electronic device, so that when the electronic device needs to be upgraded or the unknown bugs hidden in the electronic device needs to be corrected, they can be easily achieved by upgrading the firmware. In order to quickly implement the upgrading of the firmware of a large number of electronic devices, Taiwanese Pat. No. 1248027 disclosed a system and a method for on-line-upgrading a firmware. By remote controlling, a user can easily upgrade the whole firmware through a browser.

If the firmware of specific electronic devices includes a user interface, when the firmware is to be upgraded, a user can upgrade the firmware to a corresponding language version according to actual requirements. Or all the language version user interfaces are written into the electronic devices so that the user can select his/her required language version.

However, in the prior art, manufacturers usually provide a relatively complicated firmware management system to manage the firmware of different language versions. If each electronic device needs to manage several language versions, the number of the firmware will be very considerable. Even though the firmware of various language versions is written into the electronic device so as to be able to significantly reduce the management thereof, the firmware still requires a relatively greater capacity, which causes a high cost. US 2003/0153304A1 discloses a file construction for mobile communication device including machine-language-code execution segment and file execution method using the same including automatic updating of the file.

### SUMMARY OF THE INVENTION

A primary objective of the present invention is to provide a method for upgrading a firmware of a multilingual interface, wherein the firmware of all language versions can be upgraded so as to avoid the trouble on the firmware management. By means of the selection of the language version, a selected language version user interface (namely a language pack) together with the firmware are upgraded, while other non-selected language packs will be discarded without being written into the firmware of the electronic device so as to be able to reduce the capacity requirement of the firmware.

To achieve the above-mentioned objective, a method for upgrading a firmware of a multilingual interface in accordance with the present invention, which is applied for upgrading a firmware in an electronic device, includes the steps of: receiving a delivery file at least including a pointer region with orientation, a firmware information and a plurality of language packs, wherein the pointer region points to the firmware information and the language packs, the language packs each are a language version user interface, and the user interface together with the firmware information are upgraded; and according to the language version selected by a user through a controller, delivering the firmware information and the language pack that the pointer region points to, to the electronic device, so that the firmware in the electronic device is upgraded.

### BRIEF DESCRIPTION OF THE DRAWINGS

The present invention will be apparent to those skilled in the art by reading the following detailed description of a preferred embodiment thereof, with reference to the attached drawings, in which:

Figure 1 is a schematic view showing a system for upgrading a firmware of a multilingual interface according to the present invention; and

Figure 2 is a schematic view showing a method for upgrading a firmware of a multilingual interface according to the present invention.

### DETAILED DESCRIPTION OF THE PREFERRED EMBODIMENT

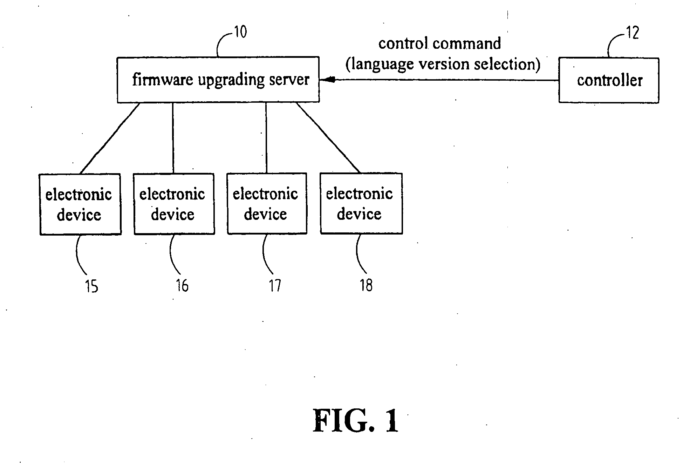

Referring to Figure 1, in a system for upgrading a firmware of a multilingual interface in accordance with the present invention, a controller 12 (usually a personal computer) remotely upgrades a firmware of electronic devices 15-18 through a firmware upgrading server 10. In doing this, the controller 12 sends control commands to the firmware upgrading server 10, which include desired operation selections similar to those in a conventional firmware upgrading method, such as selecting objects to be upgraded and upgrade version, but further include a language version selection.

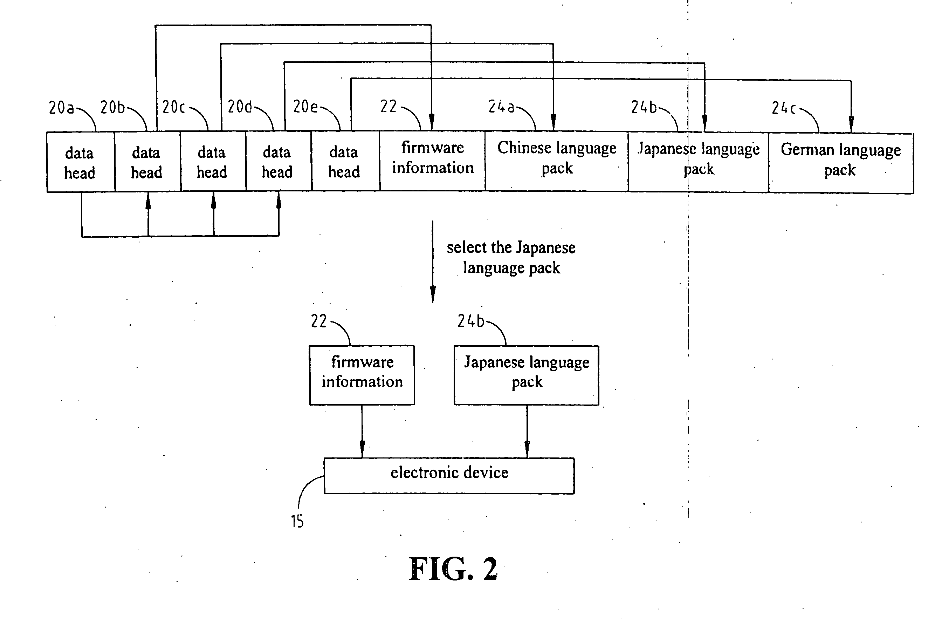

In short, in a method for upgrading a firmware of a multilingual interface in accordance with the present invention, the firmware upgrading server 10 delivers a firmware of all language versions to the electronic devices 15-18 to make them automatically perform a firmware upgrading, so as to avoid troubles on the firmware management. In the firmware upgrading method, by means of the selection of the language version in control commands, a selected language version user interface such as a language pack 24b in Figure 2 together with a firmware information 22 are upgraded, while other non-selected language packs 24a and 24c will be discarded without being written into the firmware of the electronic device 15 so as to be able to reduce the capacity requirement of the firmware.

Referring to Figure 2, in the method for upgrading a firmware of a multilingual interface in accordance with present invention, the electronic device 15 first receives a delivery file at least including a pointer region with orientation, a firmware information 22 and a plurality of language packs 24a-24c. The language packs 24a-24c each are the language version user interface, in which the user interface together with the firmware information 22 will be upgraded.

In order to let the firmware upgrading system know that the positions of the firmware information 22 and the plurality of language packs 24a-24c in the delivery file, the pointer region further includes a plurality of data heads 20a-20e with orientation. In the data heads 20a-20e, the first data head 20a records a start position of each of the data heads 20b-20e, the data head 20b records a start position of the firmware information 22, and the data heads 20c-20e record a start position of the language packs 24a-24c, e.g. Chinese, Japanese, and German language pack, respectively. However, the recorded data in the pointer region may not only be the data heads, and other similar orientation means may be used.

After receiving the delivery file, according to a language version, say Japanese language, selected by a user through the controller 12, the firmware information 22 and the language pack 24b that the data heads 20b, 20d of the pointer region respectively point to, are delivered to the electronic device 15, so that the firmware in the electronic device 15 can be upgraded.

In the firmware upgrading method of the present invention, the method may further include a firmware information verification. In detail, after receiving the delivery file, according to the start position of the firmware information 22 that is recorded in the data head 20b of the pointer region, the pointer region is removed in advance and then the firmware information 22 and the language pack are obtained, and thereafter the firmware information 22 is verified as similar to the prior art.

After verifying the firmware information 22, the firmware information 22 is delivered to the electronic device 15. Then, according to the selected language version, the data head 20d that records the start position of the language pack 24b is found out of the data head 20a, and then, the selected language pack 24b is delivered to the electronic device 15.

In addition, in order for integrating an old firmware information, which mainly lacks the data heads 20a-20e of the present invention, a length of the data heads can be used to identify whether the firmware information is the old firmware information before performing the aforesaid steps. If it is the old firmware information, a conventional method can be applied to upgrade the old firmware information while if it is the firmware like that of the present invention, the method for upgrading the firmware information according to the present invention can be applied.

Although the present invention has been described with reference to the preferred embodiment thereof, it is apparent to those skilled in the art that a variety of modifications and changes may be made without departing from the scope of the present invention which is intended to be defined by the appended claims.

## Claims

1. A method for upgrading a firmware of a multilingual interface, which is applied for upgrading a firmware in an electronic device by a controller of another electronic device, the method comprising the steps of:
receiving a delivery file at least including a pointer region with orientation, a firmware information and a plurality of language packs, wherein the pointer region points to the firmware information and the language packs, the language packs each are a language version user interface; and
according to the language version selected by a user through the controller of the other electronic device, upgrading the selected language version user interface together with the firmwave in the electronic device by delivering the firmware information and the language pack, that the pointer region points to, to the electronic device.

2. The method as claimed in Claim 1, wherein the pointer region includes a plurality of data heads, in which the first data head records a start position of all of the other data heads, and the data heads except the first data head record a start position of the firmware information and the language packs.

3. The method as claimed in Claim 2, further comprising the steps of:
after receiving the delivery file, according to the start position of the firmware information that is recorded in the data head of the pointer region, removing the pointer region and then obtaining the firmware information and the language pack; and
verifying the firmware information.

4. The method as claimed in Claim 3, further comprising the steps of:
delivering the firmware information to the electronic device after verifying the firmware information;
according to the selected language version, finding out the data head that records the start position of the language pack, from the first data head; and
according to the data head that records the start position of the selected language pack, delivering the selected language pack to the electronic device.

5. A method for upgrading a firmware of a multilingual interface, which is applied for upgrading firmware in a plurality of electronic devices by a controller, the method comprising the steps of:
receiving a delivery file at least including a pointer region with orientation, a firmware information and a plurality of language packs by each of the electronic devices, wherein the pointer region points to the firmware information and the language packs, the language packs each are a language version user interface; and
according to a language version selected by a user through the controller for each of the electronic devices, upgrading the selected language version user interface together with the firmwave in the electronic devices by delivering the firmware information and the language pack corresponding to the selected language version in the corresponding delivery file to each of the electronic devices,

## Patentansprüche

1. Verfahren zum Aktualisieren einer Firmware einer mehrsprachigen Schnittstelle, das durch eine Steuerung einer anderen elektronischen Vorrichtung zum Aktualisieren einer Firmware in einer elektronischen Vorrichtung verwendet wird, wobei das Verfahren die Schritte umfasst:
Empfangen einer Sendedatei, die mindestens einen Zeigerbereich mit Orientierung, eine Firmwareinformation und eine Vielzahl von Sprachpaketen umfasst, wobei der Zeigerbereich auf die Firmwareinformation und die Sprachpakete zeigt, wobei die Sprachpakete jeweils eine Sprachversionsnutzerschnittstelle sind, und
Aktualisieren der ausgewählten Sprachversionsnutzerschnittstelle zusammen mit der Firmware in der elektronischen Vorrichtung entsprechend einer durch einen Benutzer über die Steuerung der anderen elektronischen Vorrichtung ausgewählten Sprachversion durch Übermitteln der Firmwareinformation und der Sprachpakete, auf die der Zeigerbereich zeigt, an die elektronische Vorrichtung.

2. Verfahren nach Anspruch 1, bei welchem der Zeigerbereich eine Vielzahl von Datenköpfen umfasst, von denen der erste Datenkopf eine Startposition von all den anderen Datenköpfen speichert, und wobei die Datenköpfe außer dem ersten Datenkopf eine Startposition der Firmwareinformation und der Sprachpakete speichern.

3. Verfahren nach Anspruch 2, das ferner die Schritte umfasst:
Entfernen des Zeigerbereichs entsprechend der in dem Datenkopf des Zeigerbereichs gespeicherten Startposition der Firmwareinformation, nachdem die Sendedatei empfangen wurde, und anschließend Erhalten der Firmwareinformation und des Sprachpaketes, und
Verifizieren der Firmwareinformation.

4. Verfahren nach Anspruch 3, das ferner die Schritte umfasst:
Übermitteln der Firmwareinformationen an die elektronische Vorrichtung, nachdem die Firmwareinformation verifiziert wurde,
entsprechend der ausgewählten Sprachversionen Finden des Datenkopfes, der die Startposition des Sprachpaketes speichert, aus dem ersten Datenkopf, und
entsprechend dem Datenkopf, der die Startposition des ausgewählten Sprachpaketes speichert, Übermitteln des ausgewählten Sprachpaketes an die elektronische Vorrichtung.

5. Verfahren zum Aktualisieren einer Firmware einer mehrsprachigen Schnittstelle, das durch eine Steuerung zum Aktualisieren einer Firmware in einer Vielzahl elektronischer Vorrichtungen verwendet wird, wobei das Verfahren die Schritte umfasst:
Empfangen einer Sendedatei, die mindestens einen Zeigerbereich mit Orientierung, eine Firmwareinformation und eine Vielzahl von Sprachpaketen umfasst, durch jede elektronische Vorrichtung, wobei der Zeigerbereich auf die Firmwareinformation und die Sprachpakete zeigt, wobei die Sprachpakete jeweils ein Sprachversionsnutzerschnittstelle sind, und
Aktualisieren des ausgewählten Sprachversionsnutzerschnittstelle zusammen mit der Firmware in den elektronischen Vorrichtungen entsprechend einer durch einen Benutzer für jeweils jede elektronische Vorrichtung über die Steuerung ausgewählten Sprachversion durch Übermitteln der Firmwareinformation und der Sprachpakete an jede elektronische Vorrichtung entsprechend der ausgewählten Sprachversionen in der entsprechenden Sendedatei.

## Revendications

1. Procédé pour mettre à niveau un firmware d'une interface multilingue qui est appliqué pour mettre à niveau un firmware dans un dispositif électronique par un contrôleur d'un autre dispositif électronique, le procédé comprenant les étapes de :
recevoir un fichier de livraison comprenant au moins une région de pointeur avec orientation, une information de firmware et une pluralité de packs de langue, la région de pointeur pointant vers l'information de firmware et les packs de langue, les packs de langue étant chacun une version de langue de l'interface utilisateur et,
selon la version de langue sélectionnée par un utilisateur par le contrôleur de l'autre dispositif électronique, mise à niveau de l'interface utilisateur dans la version de langue sélectionnée ensemble avec le firmware dans le dispositif électronique en délivrant l'information de firmware et le pack de langue vers lequel le pointeur pointe au dispositif électronique.

2. Procédé selon la revendication 1 dans lequel la région du pointeur comprend une pluralité de têtes de données dans lesquelles la première tête de données enregistre une position de départ de toutes les autres têtes de données et les têtes de données, à l'exception de la première tête de données, enregistrent une position de départ de l'information de firmware et des packs de langue.

3. Procédé selon la revendication 2 comprenant de plus les étapes de :
après réception du fichier de livraison, selon la position de départ de l'information de firmware qui est enregistrée dans la tête de données de la région du pointeur, enlever la région du pointeur et ensuite obtention de l'information de firmware et du pack de langue et
vérification de l'information de firmware.

4. Procédé selon la revendication 3 comprenant de plus les étapes de :
livraison de l'information de firmware au dispositif électronique après vérification de l'information de firmware,
selon la version de langue sélectionnée, trouver la tête de données qui enregistre la position de départ du pack de langue à partir de la première tête de données et,
selon la tête de données qui enregistre la position de départ du pack de langue sélectionné, livraison du pack de langue sélectionné au dispositif électronique.

5. Procédé pour mettre à niveau un firmware d'une interface multilingue qui est appliqué pour mettre à niveau un firmware dans une pluralité de dispositifs électroniques par un contrôleur, le procédé comprenant les étapes de :
recevoir un fichier de livraison comprenant au moins une région de pointeur avec orientation, une information de firmware et une pluralité de packs de langue par chacun des dispositifs électroniques, la région du pointeur pointant vers l'information de firmware et les packs de langue, les packs de langue étant chacun une interface utilisateur dans une version de langue et,
selon la version de langue sélectionnée par un utilisateur par le contrôleur de chacun des dispositifs électroniques, mise à niveau de l'interface utilisateur dans la version de langue sélectionnée ensemble avec le firmware dans les dispositifs électroniques en délivrant l'information de firmware et le pack de langue correspondant à la version de langue sélectionnée dans le fichier de livraison correspondant à chacun des dispositifs électroniques.
